# EUROPEAN PATENT APPLICATION

(11) **EP 4 557 473 A1**
(43) Date of publication of application: **21.05.2025**
(21) Application number: 24850888.9
(22) Date of filing: 31.07.2024
(51) Int. Cl.: H01M 50/186

(54) **COVER PLATE ASSEMBLY, BATTERY AND BATTERY PACK**

(30) Priority: 04.08.2023 CN 202322099003 U
(71) Applicant: Eve Power Co., Ltd., Jingmen, Hubei 448000 (CN)
(72) Inventor: FAN, Weicheng, Jingmen, Hubei 448000 (CN); ZHANG, Lei, Jingmen, Hubei 448000 (CN)
(74) Representative: Berggren Oy
(86) International application number: PCT/CN2024/109003
(87) International publication number: WO 2025/031243

(57) **Abstract**

A cover plate assembly, a battery and a battery pack are provided by the present application. The cover plate assembly includes a cover plate and a sealing member. The cover plate is provided with a first through hole, and the sealing member is disposed to pass through the first through hole. The sealing member has a first end face and a second end face opposite to each other. The sealing member is provided with a first groove extending from the second end face. An outer sidewall of the sealing member close to the second end face is provided with a first protrusion protruding from a surface of the cover plate. A distance between an edge of the first protrusion and an axis of the first through hole is greater than a radius of the first through hole.

## Description

The present application claims priority to Chinese Patent Application No. 202322099003.2, filed on August 4, 2023. The disclosure of the abovementioned application is incorporated herein by reference in its entirety.

### TECHNICAL FIELD

The present application relates to battery technologies, in particular to a cover plate assembly, a battery and a battery pack.

### BACKGROUND

Generally, a cover plate of a cover plate assembly for a battery needs to be provided with an injection hole and an explosion-proof valve hole. The liquid injection hole is used to inject electrolyte into the battery, and the explosion-proof valve hole is used to discharge the gas generated inside the battery to prevent the battery from exploding.

In the related art, the injection hole and the explosion-proof valve hole are usually provided separately.

### SUMMARY

However, due to this configuration, it is necessary to weld a seal to the injection hole after injecting electrolyte and weld an explosion-proof valve plate to the explosion-proof valve hole, which requires more processes flows. In addition, avoidance processing is necessary at respective positions of a lower plastic corresponding to the injection hole and the explosion-proof valve hole and at respective positions of a collector plate corresponding to the injection hole and the explosion-proof valve hole in the cover plate assembly, which increases the process complexity of the lower plastic and the collector plate. Therefore, the production cost is increased and the efficiency of battery assembly is reduced.

In a first aspect of the present application, a cover plate assembly includes a cover plate and a sealing member. The cover plate is provided with a first through hole, and the sealing member is disposed to pass through the first through hole.

In a direction perpendicular to the cover plate, the sealing member has a first end face and a second end face opposite to each other. The sealing member is provided with a first groove extending from the second end face to the first end face. An outer sidewall of the sealing member close to the second end face is provided with a first protrusion extending in a direction parallel to the cover plate and protruding from a surface of the cover plate. A distance between an edge of the first protrusion and an axis of the first through hole is greater than a radius of the first through hole.

In a second aspect of the present application, a battery includes a housing, a cell and the above cover plate assembly. An accommodating cavity is provided inside the housing, and the cell is accommodated in the accommodating cavity. An end of the housing has an opening covered by the cover plate assembly. An opening of the first groove faces the cell.

In a third aspect of the present application, a battery pack includes a battery case and at least one battery, as mentioned above, arranged in the battery case.

### BENEFICIAL EFFECTS

Beneficial effects of embodiments of the present application:

In the above embodiments, a cover plate assembly, a battery and a battery pack are provided. By setting a first through hole on the cover plate, the first through hole is used as an injection hole and an explosion-proof hole. After injecting electrolyte into the first through hole, the first through hole is sealed with a sealing member. When a large amount of gas is generated inside the battery, a certain pressure of gas acts on the first groove of the sealing member, so that the first protrusion moves in the radial direction toward the center of the first through hole, so that the sealing member is lifted up from the first through hole by the gas in the battery and protrudes outside the first through hole, so as to achieve the effect of exhaust explosion prevention. The explosion-proof valve hole and the injection hole are integrated into one hole, and the structure of the sealing member is optimized, thereby ensuring a good sealing effect while playing an explosion-proof role, reducing production costs, and improving battery assembly efficiency.

### BRIEF DESCRIPTION OF THE DRAWINGS

FIG. 1 is a schematic cross-sectional view of a cover plate assembly according to one or more embodiments of the present application.
FIG. 2 is a schematic cross-sectional view of a sealing member of a cover plate assembly according to one or more embodiments of the present application.
FIG. 3 is a schematic cross-sectional view of a cover plate of a cover plate assembly according to one or more embodiments of the present application.

### DETAILED DESCRIPTION

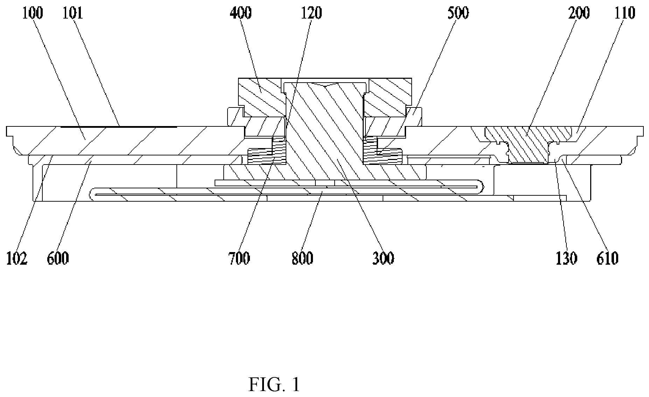

As shown in FIG. 1 to FIG. 3, a cover plate assembly according to one or more embodiments of the present application includes a cover plate 100 and a sealing member 200. The cover plate 100 is provided with a first through hole 110, and the sealing member 200 is arranged in the first through hole 110. The first through hole 110 is configured as an injection hole and an explosion-proof valve hole.

Along a direction perpendicular to the cover plate 100, the sealing member 200 has a first end face 2001 and a second end face 2002 opposite to each other, the sealing member 200 is provided with a first groove 210 extending from the second end face 2002 to the first end face 2001, an outer sidewall of the sealing member 200 close to the second end face 2002 is provided with a first protrusion 220 extending in a direction parallel to the cover plate 100, the first protrusion 220 protrudes from a surface of the cover plate 100, and a distance between an edge of the first protrusion 220 and an axis of the first through hole 110 is greater than a radius of the first through hole110. The first protrusion 220 is used to fix the sealing member 200 to the cover plate 100.

In one or more embodiments of the present application, the first through hole 110 is connected to the interior of the battery for injection of electrolyte into the battery, and the first through hole 110 is also used to discharge gas generated inside the battery to avoid the explosion of the battery.

Specifically, when the cover plate 100 is assembled with a housing of the battery, the opening side of the first groove 210 faces the inside of the housing during assembly, and the electrolyte is injected into the housing through the first through hole 110. After the injection is completed, the sealing member 200 is inserted into the first through hole 110 to seal the first through hole 110. When a large amount of gas is produced in the housing, a certain pressure of gas acts in the first groove 210 and produces a force perpendicular to the cover plate 100 on the first groove 210, making the first protrusion 220 move in the radial direction toward the center of the first through hole 110. That is, the two ends of the seal member 200 located in the second end face 2002 shrink to the center of the first groove 210, and after the first protrusion 220 shrank into the first through hole 110, the seal member 200 is lifted by the gas in the housing and protrudes outside the first through hole 110, so that the gas in the housing is discharged from the battery through the first through hole 110, thereby achieving the purpose of exhaust and explosion-proof.

The cross-section shape of the first protrusion 220 can be a triangle, but is not limited thereto. For example, a right triangle, one right-angled side of the first protrusion 220 is in contact with the outer sidewall of the sealing member 200, and the other right-angled side of the first protrusion 220 is in contact with the surface of the cover plate 100. The first protrusion 220 protrudes outside the first through hole 110, and is used to fix the sealing member 200 to the cover plate 100.

In the above embodiments, the explosion-proof valve hole and the injection hole are integrated into one hole, and the structure of the sealing member 200 is optimized, thereby ensuring a good sealing effect while playing an explosion-proof role, reducing production costs, and improving battery assembly efficiency.

In one or more embodiments of the present application, the cover plate assembly further includes a post 300, a terminal 400, an upper plastic 500, a lower plastic 600 and a collector plate 800. The cover plate 100 is provided with a second through hole 120, and the post 300 is arranged in the second through hole 120; the terminal 400 is arranged at an end of the post 300 near the first end face 2001, and the upper plastic 500 is arranged between the terminal 400 and the cover plate 100; the collector plate 800 is arranged at an end of the post 300 near the second end face 2002, and the lower plastic 600 is arranged between the collector plate 800 and the cover plate 100.

Specifically, as shown in FIG. 1, cover plate 100 has a first surface 101 and a second surface 102 opposite each other, the second surface 102 is toward the inside of the battery, the post 300 is an inverted T shape, the end of the post 300 with a larger diameter is located on the side of the second surface 102 away from the first surface 101, the end of the post 300 with a smaller diameter passes through the second through hole 120 and protruding from the first surface 101. The terminal 400 is arranged at the end of the part of the post 300 protruding from the first surface 101. The upper plastic 500 is arranged between the terminal 400 and the cover plate 100, and the upper plastic 500 is provided with a through hole, and the post 300 passes through the through hole. The upper plastic 500 is used to insulate the terminal 400 from the cover plate 100 and improve the sealing performance. A sealing ring 700 is arranged between the outer sidewall of post 300 and the inner sidewall of the second through hole 120, and the sealing ring 700 is used to improve the sealing performance between post 300 and the second through hole 120. The lower plastic 600 is arranged on the second surface 102 of the cover plate 100. The collector plate 800 is arranged on the side of the end of the post 300 with a larger diameter away from the second surface 102.

In one or more embodiments of the present application, as shown in FIG. 1, a location hole 610 is provided on the lower plastic 600, and the location hole 610 is opposite to and connected with the first through hole 110, and a location protrusion 130 matching the location hole 610 is provided on one side of the cover plate 100 close to the lower plastic 600. The lower plastic 600 is used to prevent the collector plate 800 and the cover plate 100 from contacting and causing a short circuit, so the lower plastic 600 is located between and insulates the collector plate 800 and the cover plate 100. The location protrusion 130 on the cover plate 100 is inserted into the location hole 610 on the lower plastic 600 to install and position the lower plastic 600 and the cover plate 100, and at the same time, the first through hole 110 is connected to the interior of the battery.

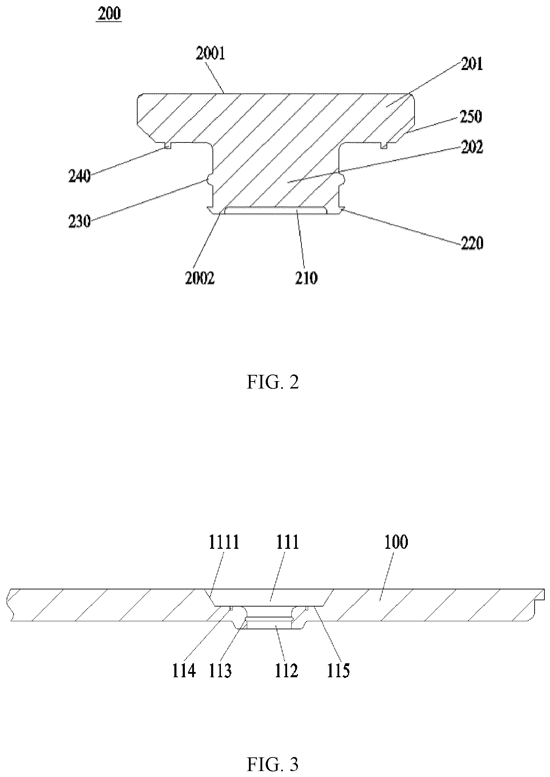

In one or more embodiments of the present application, as shown in FIG. 2 to FIG. 3, the first through hole 110 is a stepped hole with a T shaped cross-section. The first through hole 110 includes a first hole 111 and a second hole 112 arranged in a stacked manner, the diameter of the first hole 111 is greater than the diameter of the second hole 112, and a step 115 is provided between the first hole 111 and the second hole 112.

The cross-section of the sealing member 200 is "T" shaped. The sealing member 200 includes a fixing portion 201 and a sealing portion 202 connected with the fixing portion 201. The diameter of the fixing portion 201 is greater than the diameter of the sealing portion 202. The fixing portion 201 is arranged in the first hole 111, and the sealing portion 202 is arranged in the second hole 112. The diameter of the sealing portion 202 matches the inner diameter of the second hole 112, so that the sealing performance of the sealing member 200 can be guaranteed when the sealing portion 202 is accommodated in the second hole 112.

When the first through hole 110 is a stepped hole, the distance from the edge of the first protrusion 220 to the axis of the second hole 112 is greater than the radius of the second hole 112, and the distance from the edge of the first protrusion 220 to the axis of the second hole 112 is less than the radius of the first hole 111, so as to ensure the fixing function of the first protrusion 220 while avoiding the first protrusion 220 from occupying too much space.

In one or more embodiments of the present application, as shown in FIG. 2 to FIG. 3, the outer sidewall of the sealing portion 202 is provided with a second protrusion 230, and the inner wall of the second hole 112 is provided with a second groove 113 matching the second protrusion 230. When the sealing portion 202 is inserted into the second hole 112, the second protrusion 230 is interference-fitted with the second groove 113, so as to improve the sealing performance of the sealing portion 202 and improve the reliability of the connection between the sealing member 200 and the cover plate 100.

In one or more embodiments of the present application, the second protrusion 230 is an annular protrusion surrounding the outer sidewall of the sealing portion 202, and the second groove 113 is an annular through groove surrounding the inner wall of the second hole 112, which can further improve the sealing performance of the sealing portion 202.

In one or more other embodiments of the present application, a plurality of second protrusions 230 may be provided on the outer sidewall of the sealing portion 202, and a plurality of second grooves 113 matching the second protrusions 230 may be provided on the inner wall of the second hole 112, and the structures of the second protrusions 230 and the second grooves 113 are not limited to the annular shape.

The second protrusion 230 may be a protrusion with a semi-circular cross-section, and the second groove 113 may be a groove with a semi-circular cross-section. For example, the radius of the semi-circular protrusion and the semi-circular groove may be set at 0.1-0.2 mm to facilitate assembly of the seal member 200 and the cover plate 100.

It should be noted that the cross-sections of the second protrusion 230 and the second groove 113 may also be other shapes, and no specific limitation is made here.

In one or more embodiments of the present application, as shown in FIG. 2 to FIG. 3, a third protrusion 240 is arranged on the side of the fixing portion 201 near the second hole 112, and a third groove 114 matching the third protrusion 240 is arranged on the side of the step 115 toward the first hole 111. When the sealing member 200 is assembled in the first through hole 110, the third protrusion 240 is inserted into the third groove 114, so that the sealing member 200 is fixed to the cover plate 100, and the sealing member 200 is prevented from circumferential rotation.

A plurality of third protrusions 240 may be provided on the fixing portion 201, and a plurality of third grooves 114 matching the third protrusions 240 may be provided on the step 115. For example, two third protrusions 240 may be provided on the fixing portion 201, the two third protrusions 240 are located on opposite sides of the fixing portion 201, and two third grooves 114 matching the third protrusions 240 are provided on the step 115. The height of the third protrusion 240 may be 1/2 to 2/3 of the depth of the first through hole 110, and the depth of the third groove 114 matches the depth of the third protrusion 240 to ensure the location function of the third protrusion 240.

In one or more embodiments of the present application, as shown in FIG. 3, the sidewall 1111 of the first hole 111 is an inclined face, an angle between the sidewall 1111 of the first hole 111 and a plane where the cover plate 100 is located is 30° to 45°. The diameter of the first hole 110 is greater than the diameter of the fixed part 201, so that a certain gap is reserved between the sidewall 1111 of the first hole 111 and the side surface of the fixing portion 201, the sidewall 1111 of the first hole 111 is meanwhile inclined to facilitate the use of tools to lift the sealing member 200 from the gap, so as to facilitate the replacement or maintenance of the seal member 200, or the exhaust and pressure relief of the battery.

In one or more embodiments of the present application, as shown in FIG. 2, a chamfer 250 is arranged at the end of the side surface of the fixing portion 201 close to the second hole 112, so as to facilitate the use of tools to lift the sealing member 200.

In one or more embodiments of the present application, as shown in FIG. 3, along the direction perpendicular to the cover plate 100, the depth of the first hole 111 is less than or equal to half of the thickness of the cover plate 100, so as to facilitate the use of tools to lift the sealing member 200 while ensuring the sealing performance and stability of the sealing member 200.

In one or more embodiments of the present application, a battery is provided. The battery includes a housing, a cell and the cover plate assembly as described above. The interior of the housing has an accommodating cavity, and the cell is accommodated in the accommodating cavity. One end of the housing has an opening, the cover plate assembly is sealed at the opening, and the opening of the first groove 210 is toward the cell. When a large amount of gas accumulates inside the battery, the gas with a certain pressure acts on the first groove 210, so that the seal member 200 is lifted from the first through hole 110 to achieve explosion-proof and pressure relief. At the same time, the first through hole 110 also serves as an injection hole, and the electrolyte is injected into the housing from the first through hole 110.

The housing may be a cylindrical housing, and the battery may be a cylindrical battery, but is not limited thereto.

In one or more embodiments of the present application, a battery pack is provided. The battery pack includes a battery case and at least one battery as described above, and the battery is arranged in the battery case.

In the above embodiments, a cover plate assembly, a battery and a battery pack are provided. By setting a first through hole on the cover plate, the first through hole is used as an injection hole and an explosion-proof hole. After injecting electrolyte into the first through hole, the first through hole is sealed with a sealing member. When a large amount of gas is generated inside the battery, a certain pressure of gas acts on the first groove of the sealing member, so that the first protrusion moves in the radial direction toward the center of the first through hole, so that the sealing member is lifted up from the first through hole by the gas in the battery and protrudes outside the first through hole, so as to achieve the effect of exhaust explosion prevention. The explosion-proof valve hole and the injection hole are integrated into one hole, and the structure of the sealing member is optimized, thereby ensuring a good sealing effect while playing an explosion-proof role, reducing production costs, and improving battery assembly efficiency.

## Claims

1. A cover plate assembly, **characterized by** comprising a cover plate (100) and a sealing member (200),
wherein the cover plate (100) is provided with a first through hole (110), and the sealing member (200) is disposed to pass through the first through hole (110);
the sealing member (200) has a first end face (2001) and a second end face (2002) opposite to each other in a direction perpendicular to the cover plate (100);
the sealing member (200) is provided with a first groove (210) extending from the second end face (2002) to the first end face (2001);
an outer sidewall of the sealing member (200) close to the second end face (2002) is provided with a first protrusion (220) extending in a direction parallel to the cover plate (100) and protruding from a surface of the cover plate (100); and
a distance between an edge of the first protrusion (220) and an axis of the first through hole (110) is greater than a radius of the first through hole (100).

2. The cover plate assembly according to claim 1, **characterized in that** the first through hole (110) is a stepped hole comprising a first hole (111) and a second hole (112) that are stacked, a diameter of the first hole (111) is greater than a diameter of the second hole (112), and a step (115) is formed between the first hole (111) and the second hole (112); and
the sealing member (200) comprises a fixing portion (201) and a sealing portion (202) connected with the fixing portion (201), a diameter of the fixing portion (201) is greater than a diameter of the sealing portion (202), the fixing portion (201) is arranged in the first hole (111), and the sealing portion (202) is arranged in the second hole (112).

3. The cover plate assembly according to claim 2, **characterized in that** an outer sidewall of the sealing portion (22) is provided with a second protrusion (230), and an inner wall of the second hole (112) is provided with a second groove (113) matching the second protrusion (230).

4. The cover plate assembly according to claim 3, **characterized in that** the second protrusion (230) is an annular protrusion surrounding the outer sidewall of the sealing portion (202), and the second groove (113) is an annular through groove surrounding the inner wall of the second hole (112).

5. The cover plate assembly according to claim 2, **characterized in that** a side of the fixing portion (201) close to the second hole (112) is provided with a third protrusion (240), and a side of the step (115) facing the first hole (111) is provided with a third groove (114) matching the third protrusion (240).

6. The cover plate assembly according to claim 2, **characterized in that** a sidewall of the first hole (111) is an inclined face, and an angle of 30° to 45° is formed between the sidewall of the first hole (111) and a plane where the cover plate (100) is located; and
the diameter of the first hole (111) is greater than the diameter of the fixing portion (201).

7. The cover plate assembly according to claim 6, **characterized in that** an end of a side surface of the fixing portion (201) close to the second hole (112) is provided with a chamfer (250).

8. The cover plate assembly according to any one of claims 2-7, **characterized in that** in the direction perpendicular to the cover plate (100) a depth of the first hole (111) is less than or equal to half of a thickness of the cover plate (100).

9. The cover plate assembly according to any one of claims 1-7, **characterized in that** the cover plate assembly further comprise a post (300), a terminal (400), an upper plastic (500), a collector plate (800) and a lower plastic (600),
wherein the cover plate (100) is further provided with a second through hole (120), and the post (300) is disposed to pass through the second through hole (120);
the terminal (400) is arranged at an end of the post (300) close to the first end face (2001), and the upper plastic (500) is arranged between the terminal (400) and the cover plate (100); and
the collector plate (800) is arranged at an end of the post (300) close to the second end face (2002), and the lower plastic (600) is arranged between the collector plate (800) and the cover plate (100).

10. The cover plate assembly according to claim 9, **characterized in that** the lower plastic (600) is provided with a location hole (610) that is opposite to and connected with the first through hole (110); and
a side of the cover plate (100) close to the lower plastic (600) is provided with a location protrusion (130) matching the location hole (610).

11. A battery, **characterized by** comprising a housing, a cell and a cover plate assembly of any one of claims 1-10, wherein an accommodating cavity is provided inside the housing, and the cell is accommodated in the accommodating cavity; an end of the housing has an opening covered by the cover plate assembly; and an opening of the first groove (210) faces the cell.

12. A battery pack, **characterized by** comprising a battery case and at least one battery of claim 11 arranged in the battery case.
